## Europäisches Patentamt
## European Patent Office
## Office européen des brevets

(11) Publication number: **0 011 991**
**A1**

(12) # EUROPEAN PATENT APPLICATION

(21) Application number: 79302672.5

(22) Date of filing: 22.11.79

(51) Int. Cl.³: **G 08 C 23/00**
**A 01 M 7/00**

(30) Priority: 23.11.78 GB 4574978

(43) Date of publication of application:
11.06.80 Bulletin 80/12

(84) Designated Contracting States:
BE DE FR GB IT NL SE

(71) Applicant: E. Allman & Company Limited
Birdham Road, Chichester
Sussex(GB)

(72) Inventor: McFarlane, Phillip James
The Studio, Rosary Gate Piggery Hall Lane
West Wittering, West Sussex(GB)

(74) Representative: Pritchard, Colin Hubert et al,
Mathys & Squire 10 Fleet Street
London EC4Y 1AY(GB)

(54) Improvements in or relating to remote control devices.

(57) A remote control device for transmitting signals to or from an enclosure, for example from a cab of an agricultural vehicle to equipment outside the cab. The device includes transmitting (2,11) and receiving elements (3,15) mounted on respective opposite sides of a side wall (23) of the cab. When operated, the transmitting element causes a change in a magnetic, electric or electromagnetic field or in ultrasonic radiation applied via the side wall to the receiving element. The receiving element generates an electric signal representative of the change.

./...

FIG.3

This invention relates to remote control devices.

In both industry and agriculture it is often necessary to transmit signals from one environment to another. Examples are the transmission of signals from a control room to an operating room and from a vehicle cab to equipment outside the cab. It is usual to transmit such signals via electric cables, pneumatic or hydraulic hoses, or mechanical linkages which extend through a wall separating one environment from the other. Sealing is provided between the wall and the cable, hose or linkage, where necessary.

In some cases it is necessary to provide only a temporary connection of the above kind between a control device on one side of the wall and equipment on the other side. An example occurs in agriculture, where spraying equipment mounted on a trailer must be controlled by an operator in a cab which is sealed to keep out noise and dirt and may be pressurised to ensure that chemicals do not enter the cab. Robust connectors are required because of the harsh environment. If such connectors have many contacts they tend to be large and this, together with the need for a heavy cable, makes it difficult to thread the cable through the seal. Providing a window which can be opened to allow the cable to pass through destroys the advantage of the sealed cab. Where panels are provided for threading cables into the cab, these are not often used because of the time and difficulty involved.

According to the present invention a remote control device comprises an enclosure, and transmitting and receiving elements which are mounted on respective opposite sides of a side wall of the enclosure, the transmitting element being adapted, when operated, to cause a change in a magnetic, electric or electromagnetic field or in ultrasonic radiation applied via the side wall to the receiving element, and the receiving element being adapted to generate an electrical signal representative of the said change in magnetic, electric or electromagnetic field or ultrasonic radiation.

The invention will now be described, by way of example, with reference to the accompanying drawings, in which:-

Figures 1 and 2 show schematically parts of first and second remote control devices according to the invention; and

Figure 3 shows schematically a third remote control device according to the invention.

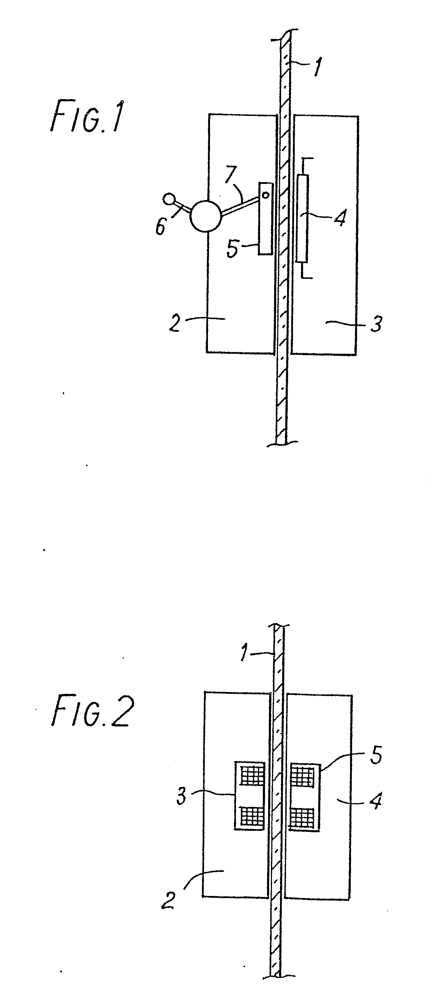

The device shown in Figure 1 of the drawings is a control device for use by an operator in switching remote equipment on and off.

In the device of Figure 1 a sheet 1 of glass forms part of a side wall separating the environment in which the equipment is located from an operator's environment. On one side of the sheet 1 is a box containing a receiving element in the form of a magnetically operable switch 4, which is a reed switch or a hall effect semiconductor. Electrical connections are made between the switch 4 and the equipment, which is not shown in Figure 1. A box 2 on the other side of the sheet 1 contains transmitting element in the form of a permanent magnet 5 and a linkage 7 which connects the magnet to an operating lever 6. Each of the boxes 2 and 3 is releasably attached to the glass sheet 1 by means of suction pads.

- 4 -

0011991

In Figure 1 the magnet 5 is shown adjacent to the sheet 1 and the switch 4 on the opposite side of the sheet. With the magnet 5 in this position there is a strong magnetic coupling between the magnet and the switch 4 and the contacts of the switch are closed. By operating the lever 6 the magnet 5 is moved to a position wherein the magnetic coupling between the magnet and the switch 4 is substantially reduced and the switch contacts are open.

In a modification of the device shown in Figure 1, more than one magnetically operable switch is mounted within the box 3. For each of the switches there is an associated magnet, linkage and operating lever on the other side of the sheet 1, the arrangement being such that there is no significant magnetic coupling between a magnet and any switch not associated therewith. A master operating lever and linkages are also provided so that all of the switches can be operated together.

The device shown in Figure 1, or the modified device referred to above, is suitable for use in controlling the supply of liquid to each of three sections of boom on an agricultural spraying equipment.

In this equipment a solenoid operated valve is provided in the supply line from a tank to each of the boom sections. An electrical cable extends from each valve to an associated reed switch in a box releasably secured to the outside of the operator's cab. A further cable connects each reed switch to an electric battery. For each switch and its associated valve there is an indicator·

0011991

light, visible to the operator through the glass wall of his cab.

On the inside of the cab is a control box containing three permanent magnets, each associated with a respective one of the reed switches. Associated with each magnet is an operating lever which enables the magnet to be moved, independently of the other magnets, between operative and inoperative positions. In the operative position there is a strong magnetic coupling between the magnet and the associated reed switch, the switch contacts are closed and electric current is supplied from the battery to a solenoid valve via the contacts. In the inoperative position of a magnet, the magnetic coupling between the magnet and the associated switch is substantially reduced and the switch contacts are open.

A master operating lever is provided for moving all three magnets and hence operating all three solenoid valves together.

If the boom has more than three sections, the number of solenoid valves, switches and magnets is increased accordingly.

It will be appreciated that the present device is simple to fit to a sealed cab, since no electrical connections have to be made through the cab wall. The device includes few components. To avoid operation of a switch by a magnet associated with an adjacent switch, the spacing between adjacent switches is made at least twice as great as the maximum spacing between a magnet and an associated switch which causes the switch contacts to close.

Figure 2 shows part of a second device according to the invention which is suitable for controlling the operation of a greater number of external circuits and can be used for transmitting analogue signals as well as performing simple on-off switching.

In the device of Figure 2 a box 2 attached to a transmitting side of a glass sheet 1 contains a coil 3 wound upon a magnetic core. The core is a pot-core, having a generally cylindrical side wall, an end wall, and an axially extending member. The core serves to direct a magnetic field associated with current flowing in the coil 3 across the sheet 1.

On the opposite receiving side of the sheet 1 there is a box 4 containing a second coil 5, which is also wound upon a pot-core.

In use, an alternating current is applied to the coil 3 and this current is modulated with a signal representing information which has to be transmitted to the other side of the sheet 1. Magnetic coupling via the sheet 1 ensures that a corresponding modulated alternating signal is generated in the receiving coil 5 on the other side of the sheet. This corresponding signal is demodulated and the information extracted by detecting circuits, not shown in Figure 2.

Owing to its faster response time and lack of wear, the device of Figure 2 may be modified to include a time division multiplex system which is used to transmit many channels of information over a single link. If the current consumption of circuits associated with the transmitting coil 3 is kept low, a similar magnetic coupling between coils can be used to transmit power to those circuits from the other side of the sheet 1. This avoids the need for electrical connections for supplying power to the box 2.

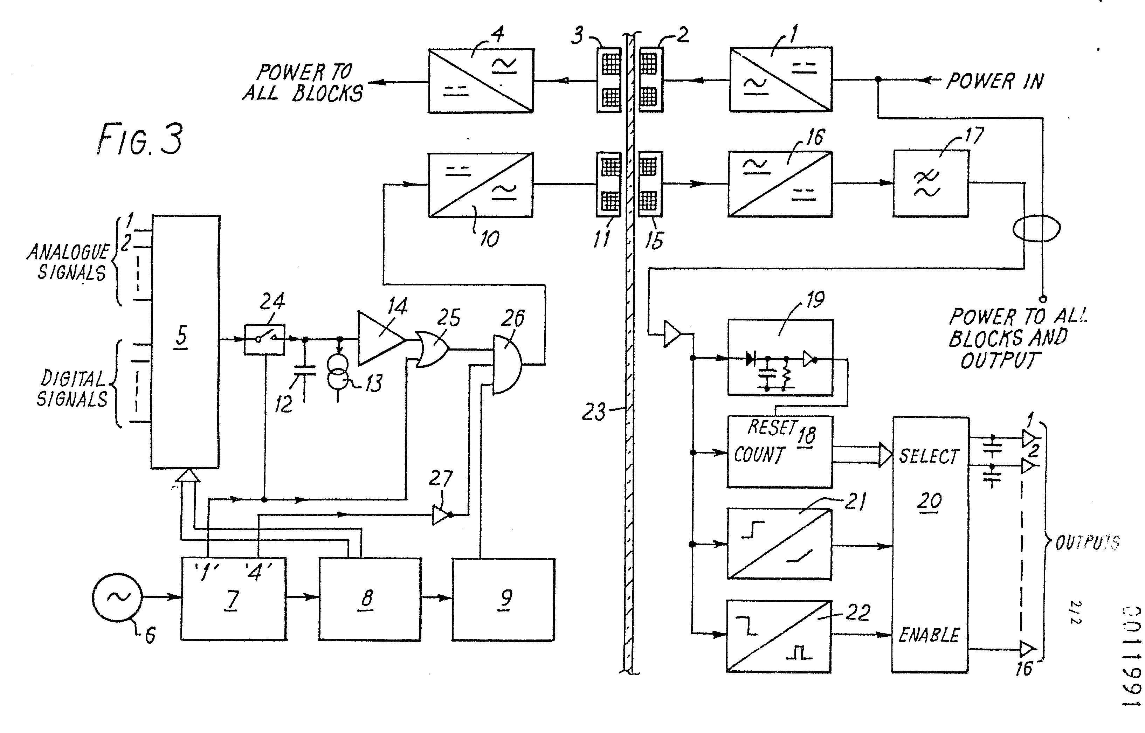

Figure 3 of the drawings shows such a device for use with tractor mounted agricultural spraying equipment. The device is used in remotely controlling operation of hydraulic circuits which effect folding and height adjustment of a spraying boom, in addition to controlling the rate of supply of spraying liquid to each section of the boom. There are sixteen channels in all, some being used for transmitting analogue (continuously variable) signals and others for digital (on-off) signals.

In the device of Figure 3 a glass sheet 23 forms part of a side wall of a sealed cab for a driver of the tractor.

A transmitting coil 2 is mounted inside a box (not shown) which is releasably attached to the outside of the sheet 23 and the coil is connected to an output of an oscillator 1. Power is supplied to the oscillator 1 from the tractor battery. On the other side of the sheet 23, within the cab, there is a second box (also not shown) containing a receiving coil 3. The coil 3, which is magnetically coupled to the coil 2 via the sheet 23, is connected to a rectifier 4. The oscillator 1, the coils 2 and 3 and the rectifier 4 are used for transmitting power from the tractor battery to circuits in the device which are located within the cab.

At an input to the circuits within the cab is a multiplexer 5 having sixteen inputs, any of which can be analogue or digital. A sixteen-state counter 8 is coupled to the multiplexer 5 and serves to provide signals for scanning the sixteen inputs, causing each input in turn to be connected to an output of the multiplexer. The counter 8 is triggered from a four-state counter 7 which is connected to an oscillator 6.

An output of the multiplexer 5 is connected via a switch 24 to a timing generator which includes a capacitor 12, a constant current source 13 and a comparator 14 for monitoring the voltage on the capacitor 12.

Connected to an output of the comparator 14 is a first input of an OR-gate 25, which has a second input connected to an output of the counter 7 which is a logical 1 during the first state of the counter. An output of the gate 25 is connected to a first input of an AND gate 26. The gate 26 has a second input connected via an inverter 27 to an output of the counter 7 which is a logical 1 during the fourth state of the counter and a third input connected to an output from the counter 8.

An oscillator 10 has its input connected to an output of the AND gate 26 and its output connected to a second transmitting coil 11, which is mounted within the same box as the coil 3.

Associated with the coil 11 is a second receiving coil 15 which is mounted inside the same box as the coil 2 on the outside of the cab. The coils 11 and 15 are magnetically coupled together via the sheet 23.

The coil 15 is connected to a demodulator 16 which is in turn connected to a filter 17. An output from the filter 17, together with a lead from the tractor battery, is connected via a three-core cable to a decoding box at the rear of the tractor.

In the decoding box the cable is connected to a sixteen state counter 18 and to a resetting circuit 19 for the counter 18. Outputs from the counter 18 are connected to the select inputs of a demultiplexer 20 which has sixteen outputs corresponding to respective inputs to the multiplexer 5. A storage capacitor is connected to each output of the demultiplexer.

The cable from the filter is also connected to an integrator 21 whose output is connected to a signal input of the demultiplexer 20. Finally, the cable is connected to a circuit 22 for providing an enabling input signal to the demultiplexer.

When the present device is in use, current is supplied from the tractor battery to the oscillator 1 and an alternating signal from the oscillator is applied to the coil 2. As a result of the magnetic coupling between the coils 2 and 3, a corresponding alternating current is induced in the coil 3 and applied to the rectifier 4. The rectifier 4 then provides a rectified output current which serves as a power supply to the remaining circuits within the cab. Circuits outside the cab are supplied directly from the tractor battery.

Input signals are spplied to some or all of the sixteen inputs of the multiplexer 5 by the driver of the tractor. As hereinafter described, the scanning signals from the counter 8 cause the input signals to appear in sequence at the output of the multiplexer, where they are applied to the time delay circuit. In the time delay circuit the signals are converted to pulse width modulated signals, which are applied via the gates 25

0011991

and 26 to the oscillator 10 and the coil 11.

In operation of the circuits associated with the scanning of the multiplexer 5, the counter 7 is advanced from one state to the next succeeding state each time a clock pulse is delivered by the oscillator 6. The counter 7 moves through states 1,2,3 and 4, and then returns to state 1.

The counter 8 receives a trigger pulse from the counter 7 each time that counter moves from state 4 to state 1. Each trigger pulse advances the counter 8 from one state to the next succeeding state, there being sixteen states in all.

The counter 9 receives a trigger pulse from the counter 8 when that counter moves from state 16 to state 1. Each trigger pulse advances the counter 9 from state 1 to state 2, or state 2 to state 1.

With each of the counters 7,8 and 9 in state 1, a logic voltage from state 1 of the counter 7 enables the switch 24 and causes a logic 1 to be applied from the output of the gate 25 to the first input of the gate 26, a logic voltage is applied to the second input of the gate 26, this being an inversion of the logic 0 at the fourth state of the counter 7, a logic 1 is applied to the third input of the gate 26 from the counter 9, and the first input to the multiplexer 5 is connected to its output.

The three logic 1 voltages applied to the gate 26 result in a logic 1 at the output of the gate, and this in turn enables the oscillator 10. A signal is therefore applied to the coil 11 and transmitted from the coil 11 to the coil 15. It will be ·

appreciated that such a signal, of duration equal to the time for which the counter 7 remains in state 1, is transmitted at the beginning of a scan of each input to the multiplexer, irrespective of whether or not an input signal is applied to that input. This is necessary for correct decoding by those parts of the device outside the cab.

Whilst the counter 7 is in the state 1, the signal at the first input to the multiplexer 5 is applied via the switch 24 to the timing generator, where it charges the capacitor 12 up to a voltage equal to the input voltage.

When the counter 7 is in states 2 and 3 the switch 24 is opened and the logic 1 voltage is removed from the second input of the gate 25. The capacitor 12 discharges to zero through the constant current source 13, the circuit parameters being so arranged that the discharge is completed before the counter 7 has reached the end of state 3. During the discharge the comparator 14 monitors the voltage on the capacitor and provides a logic 1 output as long as the voltage across the capacitor is above a predetermined value. The means that logic 1 voltages appear at the outputs of gates 25 and 26 and the oscillator 10 is enabled for a time representative of the voltage across the capacitor 12, and hence representative of the magnitude of the input signal at the first input to the multiplexer.

When the counter 7 is switched to state 4 the oscillator 10 is disabled by the application of a logic 0 voltage from the

- 12 -

0011991

gate 26, since the signal at the third input to the gate, which is derived from the fourth stage of the counter 7, has been switched to a logic 0.

As the counter 7 is switched back to the state 1, the counter 8 is switched to state 2 and the input signal at the second input to the multiplexer 5 is applied via the switch 24 to the timint generator. The oscillator 10 is enabled whilst the counter 7 is in the state 1 and it is further enabled for a period representing the magnitude of the input signal at the second input to the multiplexer, in the manner described above. This process is repeated for each of the sixteen inputs to the multiplexer 5.

When the counter 8 has finally reached state 16 and is then switched from state 16 back to state 1, the counter 9 is switched to state 2. The counter 9 remains in state 2 until the counter 8 has again counted up to state 16 and has been switched back to state 1. Throughout this second count by the counter 8, the counter 9 applies a logic 0 voltage to the third input of the gate 26. The output of the gate 26 is therefore at a logic 0 voltage and the oscillator 10 is disabled. There is therefore a long break in the signals applied from the coil 11 to the coil 15, and this break is used for synchronisation purposes.

The magnetic coupling between the coils 11 and 15 causes an alternating signal to be induced in the coil 15 whenever the oscillator 10 is enabled. This signal is demodulated by the demodulator 16 and filtered by the filter 17 to remove the carrier and to recover the

9011991

original pulsed signal. From the filter 17 the signal is applied via the three-core cable to the counter 18, the resetting circuit 19, the integrator 21 and the circuit 22.

Each time a leading edge of a pulse from the filter 17 is applied to the counter 18, the counter is advanced by one state and the input to the demultiplexer 20 is connected to the next succeeding one of the outputs 1 to 16. The resetting circuit 19 resets the counter 18 to state 1 when the signal input from the filer 17 has been at a logic 0 for some time, i.e. during the long synchronisation break.

Each pulse from the filter 17 is also applied to the integrator 21, which generates a voltage representing the duration of that part of the pulse corresponding to the time taken for capacitor 12 to discharge, a zero correction being made for the intial part of the pulse generated when the counter 7 was in state 1. The voltage from the integrator 21, which is therefore representative of the voltage at a respective one of the sixteen inputs to the multiplexer 5, appears at the associated output of the demultiplexer 20 during a pulse generated by the enabling circuit 22. This pulse ensures that the output from the integrator is steady before being applied to the output of the demultiplexer. At the end of this enabling pulse, the integrator 21 is reset.

Each voltage appearing at an output of the demultiplexer 20 is applied to an associated storage capacitor. An amplifier connected to the capacitor produces an amplified signal for driving an associated solenoid valve or motor in the spraying equipment.

Additional circuitry, not shown, is provided for resetting each output of the demultiplexer 20 to zero voltage if the signal associated with that output falls to zero for a time greater than the above-mentioned synchronisation gap. This serves to safeguard against one of the boxes being removed from the glass sheet 23.

The device of Figure 3 is preferably constructed of CMOS logic circuitry, the counters 7, 8 and 9 each being part of a CD4024 type, the multiplexer 5 being two CD4051 types, and the random logic CD4001 and CD4011 types.

In a further embodiment of the invention, an electromagnetic coupling is provided between one side of a glass sheet and the other. Visible, radio frequency or infrared radiation, which can be modulated electrically at a higher frequency than the frequency used in the magnetic system described above, is then employed. Alternatively, a low frequency, simpler device can employ visible or infrared radiation and a shutter for modulating the radiation.

A device according to the invention may employ ultrasonic transducers mounted on respective opposite sides of a side wall, information then being transmitted by varying the amplitude or phase of the radiation. Finally, each transmitting and receiving element may be a plate of a capacitor, information being transmitted by varying the charge applied to the transmitting element, thereby to vary the electric field between the two elements.

It will be appreciated that a device according to the invention can be used for controlling equipment on the other side of a sheet made of any material through which a magnetic or electromagnetic coupling can be effected.

Each transmitting and receiving agent may be releasably attached to a clamp which is fixedly secured to the side wall of an enclosure.

0011991

1. A remote control device comprising an enclosure, and transmitting and receiving elements which are mounted on respective opposite sides of a side wall of the enclosure, the transmitting element being adapted, when operated, to cause a change in a magnetic, electric or electromagnetic field or in ultrasonic radiation applied via the side wall to the receiving element, and the receiving element being adapted to generate an electrical signal representative of the said change in magnetic, electric or electromagnetic field or ultrasonic radiation.

2. A device as claimed in claim 1, wherein the transmitting and receiving elements are each releasably mounted on the side wall of the enclosure.

3. A device as claimed in claim 1 or 2, wherein the transmitting element is coupled to an output of a time division multiplex transmitting system, whereby a series of channels of information is transmitted via a single transmitting element.

4. A device as claimed in any one of claims 1 to 3, wherein a first transmitting element is mounted on one side of the side wall and a second transmitting element is mounted on the other side of the side wall, each transmitting element having an associated receiving element on the side of the wall opposite thereto.

5. A device as claimed in claim 4, wherein the first transmitting element is adapted, when operated, to cause a change in a magnetic or electromagnetic field applied via the side wall to the associated receiving element, the first transmitting element is coupled to an output of a circuit for transmitting electrical power to the associated first receiving element, and the second transmitting element is coupled to an output of a circuit for transmitting electrical signals to the associated second receiving element.

6. A device as claimed in any one of claims 1 to 4, wherein the or each transmitting element comprises a movable permanent magnet, the or each receiving element comprises a magnetically operable switch, and operation of the or each transmitting element is effected by moving the element relative to the associated receiving agent.

7. A device as claimed in any one of claims 1 to 4, wherein the or each transmitting element comprises an electromagnet, and operation of the or each transmitting element is effected by varying the current supplied to the electromagnet, thereby to vary the magnetic field applied to the associated receiving element.

8. A device as claimed in any one of claims 1 to 4, wherein the or each transmitting and receiving element comprises a capacitor plate, and operation of the or each transmitting element is effected by varying the charge appliedto the or each transmitting element.

9. A device as claimed in any one of claims 1 to 4, wherein the or each transmitting and receiving element comprises an ultrasonic transducer.

10.  A device as claimed in any one of claims 1 to 4, wherein the or each transmitting element comprises a transmitter of visible, infrared or radio frequency electromagnetic radiation.

FIG.1

FIG.2

FIG.3

POWER TO ALL BLOCKS

POWER IN

POWER TO ALL BLOCKS AND OUTPUT

ANALOGUE SIGNALS

DIGITAL SIGNALS

RESET COUNT

SELECT

ENABLE

OUTPUTS

## DOCUMENTS CONSIDERED TO BE RELEVANT

| Category | Citation of document with indication, where appropriate, of relevant passages | Relevant to claim |
|---|---|---|
| X | <u>US - A - 3 310 736</u> (BAYLY)<br><br>* Column 3, line 59 to column 4, line 4; column 4, line 58 to column 5, line 22; claim 1; figures 1,2 * | 1,4,5, 7 |
| X | <u>US - A - 3 260 979</u> (LEAVITT)<br><br>* Claim 4; figure 5 * | 1,7 |
| X | <u>FR - A - 1 564 611</u> (LABORATOIRE <u>CENTRAL DES INDUSTRIES</u> ELEC-TRIQUES)<br><br>* Page 2, right-hand column, lines 13-22; figure 1 * | 1,9 |
| X | <u>US - A - 4 064 806</u> (APSTEIN)<br><br>* Column 3, lines 21-40; figure 2 * | 1,9 |
| X | <u>DE - A - 2 324 408</u> (GENSHEIMER)<br><br>* Claim 1; figure 1 * | 1,6 |
|  | <u>US - A - 3 747 054</u> (ARVANETAKIS)<br><br>* Abstract; column 3, lines 49-58; figure 1 * | 1,2 |
|  | <u>US - A - 3 753 221</u> (STEVENS)<br><br>* Column 2, line 28 to column 3, line 11; figure 1 *<br><br>./. | 3 |

**CLASSIFICATION OF THE APPLICATION (Int. Cl. 3)**

G 08 C 23/00
A 01 M 7/00

**TECHNICAL FIELDS SEARCHED (Int.Cl. 3)**

G 08 C 23/00
A 01 M 7/00
H 01 H 36/00
G 08 C 17/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 14-02-1980 | WANZEELE |

EPO Form 1503.1 06.78

0011991
Application number

European Patent
Office

EUROPEAN SEARCH REPORT

EP 79 30 2672
-2-

| Category | Citation of document with indication, where appropriate, of relevant passages | Relevant to claim | CLASSIFICATION OF THE APPLICATION (Int. Cl. 3) |
|---|---|---|---|
| | GB - A - 880 227 (NIPPON ELECTRIC COMP.) <br> ж Page 1, lines 73-86; figure 1 ж <br> -- <br> DE - A - 2 700 503 (HUSTADT) <br> ж Page 3, lines 3-21 ж <br> -- | 8 <br><br><br> 9,10 | |
| EP | FR - A - 2 417 751 (ARCHAMBAULT) <br> ж Page 3, lines 3-28; figure 1 ж <br> ---- | 1,7 | TECHNICAL FIELDS SEARCHED (Int. Cl. 3) |

EPO Form 1503.2   06.78